# EUROPEAN PATENT APPLICATION

(11) **EP 1 520 987 A1**
(43) Date of publication of application: **06.04.2005**
(21) Application number: 04022183.0
(22) Date of filing: 17.09.2004
(51) Int. Cl.: F04B 27/18

(54) **Valve**

(30) Priority: 30.09.2003 JP 2003339919
(71) Applicant: Fujikoki Corporation, Tokyo 158-0082 (JP)
(72) Inventor: Okii, Toshiki, Setagaya-ku, Tokyo 158-0082 (JP); Kume, Yoshiyuki, Setagaya-ku, Tokyo 158-0082 (JP)
(74) Representative: Gleiss, Alf-Olav, Dr.

(57) **Abstract**

A control valve for use in a variable capacity type compressor, the control valve comprising a valve body (60); a solenoid magnetizing portion (70); and a pressure sensitive portion (86) comprising a pressure sensor (86a). A valve (80) is provided to have a large diametral portion (82a) , and a neck portion (82) neighboring, through a step portion, to the large diametral portion. The valve body (60) is provided with a guiding hole (68) in which a circumferential wall portion of the large diametral portion (82a) is to be introduced and slidably moved. The step portion is provided with a plane (183) extending from the wall portion of the large diametral portion (82a) toward the neck portion (82) to a predetermined extent. The neck portion (82) is partially tapered to form a tapered portion (184). The large diametral portion (82a) is provided, in the vicinity of the step portion, with a groove or grooves (185).

## Description

### BACKGROUND OF THE INVENTION

The present invention relates to a control valve which is adapted to be employed in a variable capacity type compressor, and in particular, to a control valve for a variable capacity type compressor, which is designed to control, as required, the feeding of cooling gas from a discharge pressure region into the interior of crank chamber.

As disclosed in Patent Publication (Kokai) No.2003-166666 A (2003) for example, the variable capacity type compressor is employed for compressing and circulating a cooling gas in the refrigerating cycle of the air conditioner of vehicles. As for this variable capacity type compressor, there is known one which is provided with a cooling gas passageway for permitting the discharge pressure region to communicate with the crank chamber, wherein the inclination angle of swash plate is enabled to change through the adjustment of the pressure of cooling medium inside the crank chamber, thereby causing the cooling gas discharge volume to vary.

In this case, the regulation of the pressure inside the crank chamber is effected by the adjustment of opening degree of the control valve provided at a midway of the cooling gas passageway on the occasion of feeding a highly pressurized and compressed cooling gas from the discharge pressure region into the crank chamber. This control valve is composed, for example, of a valve body, a solenoid magnetizing portion and a pressure sensitive portion comprising a pressure sensor.

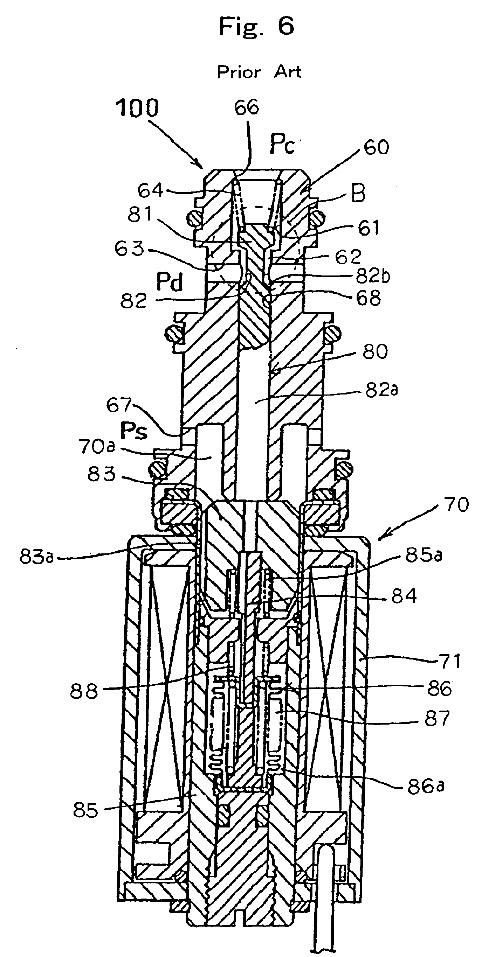

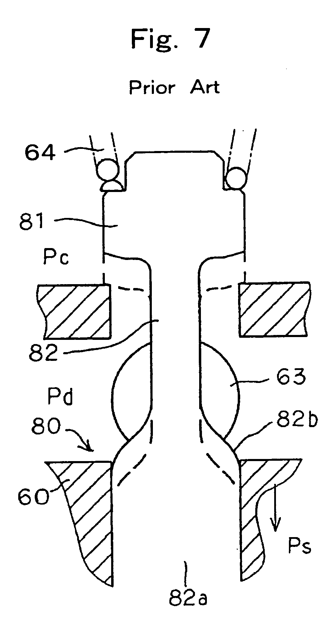

This control valve will be further explained with reference to FIGs. 6 and 7. Herein, FIG. 6 is a longitudinal cross-sectional view of the control valve, and FIG. 7 is an enlarged sectional view showing a region encircled by "B" in FIG. 6. As mentioned above, the control valve 100 is composed of a valve body 60, a solenoid magnetizing portion 70 and a pressure sensitive portion 86. The solenoid magnetizing portion 70 comprises a solenoid housing 71 as an external casing in which a plunger 83 which is permitted to move in the longitudinal direction by the effect of magnetization of solenoid, a suction member 85 and a stem 84 are disposed. A plunger chamber 70a having the plunger 83 disposed therein is communicated with a cooling medium inlet port 67 which is provided in the valve body 60. The pressure sensitive portion 86 is positioned below the solenoid housing 71 and provided therein with a pressure sensitive chamber 86a in which a bellows 87 and a spring 88 for actuating the plunger 83 by way of the stem 84, etc. are disposed.

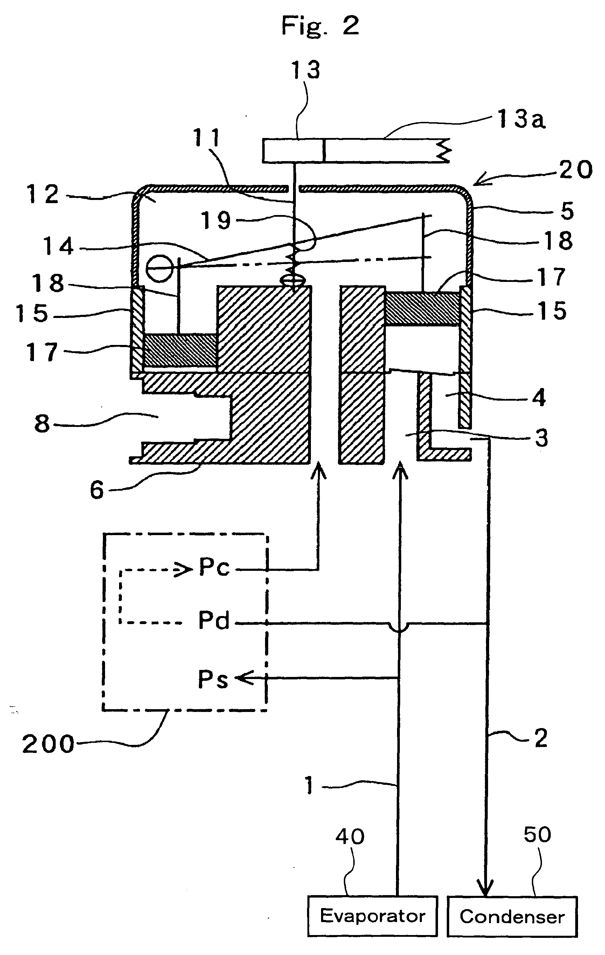

The valve body 60 is provided with a valve chamber 61 in which a valve 80 to be opened or closed by means of the plunger 83 is disposed. Further, this valve chamber 61 is constructed such that a cooling gas of a high discharge pressure Pd is designed to be introduced via a discharge chamber (see FIG. 2) into a cooling medium discharge port 63. This valve chamber 61 is provided at the bottom thereof with a valve hole 62 which is communicated with the cooling medium discharge port 63, and an upper portion of the valve chamber 61 is communicated with a crank chamber cooling medium port 66. In the valve chamber 61, there is also disposed a valve-closing spring 64 urging the valve 80 to move toward the bottom side (a valve hole 62 side) of the valve chamber 61.

The valve 80 is formed of a rod-shaped body having different diameters and comprising a head portion 81, a neck portion 82, and a large diametral portion 82a, wherein the head portion 81 is positioned in the valve chamber 61, the neck portion 82 is positioned in the valve hole 62 so as to face the cooling medium discharge port 63 which is communicated with a discharge piping 2 (see FIG. 2), and the large diametral portion 82a is fitted into a guiding hole 68 provided in the valve body 60 and sustained enabling the large diametral portion 82a to slidably move up and down. The lower end portion of the large diametral portion 82a is positioned in a plunger chamber 70a into which a cooling gas having a suction pressure Ps is designed to be introduced. Further, the lower end portion of the large diametral portion 82a is contacted with the plunger 83, so that the valve 80 is caused to move up and down as the plunger 83 is moved up and down, thereby making it possible to adjust the gap between the head portion 81 of the valve 80 and a valve seat placed on the top face of the valve hole 62. Thus, a sucked cooling medium of low temperature that has been introduced into the plunger chamber 70a is enabled to be introduced into a pressure sensitive portion 86 as explained hereinafter.

As shown in FIG. 6, the plunger 83 is disposed in a solenoid housing 71 attached, through caulking, to the valve body 60. This plunger 83 is slidably supported by a pipe 83a which is closely contacted with a lower end portion of the valve body 60. In a cavity formed at a lower portion of the plunger 83, there is inserted an upper portion of the stem 84, a lower portion of which being protruded from the upper end side to the lower end side of the suction member 85 and sustained in a slidable manner relative to the suction member 85. Between the plunger 83 and the suction member 85, there is provided a valve-opening 85 spring for urging the plunger 83 to move away from the suction member 85.

A lower portion of the stem 84 is detachably mounted on a stopper provided inside the bellows 87 disposed in the pressure sensitive chamber 86a. Between this stopper and the suction member 85, there is provided the spring 88 for urging the stopper to move away from the suction member 85.

The operation of the aforementioned variable capacity type compressor 20 and of the control valve 100 will be explained with reference to FIGs. 2, 6 and 7. The rotational driving force of the engine for vehicles is always transmitted from a pulley 13 via a driving belt 13a to a rotational shaft 11, and the torque of the rotational shaft 11 is transmitted to a rocking plate 14 to thereby rotate the rocking plate 14. The rotation of this rocking plate 14 is converted into a linear reciprocating motion of a piston 17. As a result, the volume of the compression chamber in the cylinder 15 is caused to alter, and due to this alteration of volume, the suction, compression and discharge of cooling gas are permitted to take place successively, thus permitting the cooling gas to discharge at a flow rate in proportion to the inclination angle of the rocking plate 14.

First of all, in the refrigerating cycle (not shown), if the thermal load becomes high, the in-flow of cooling gas from the discharge chamber 4 into the crank chamber 12 is obstructed, thus decreasing the pressure of cooling medium in the crank chamber 12. As a result, the force to be produced on the rear side of piston 17 during the compression stroke is minimized, so that the total force to be produced on the rear face side of piston 17 becomes smaller than the total force to be produced on the front face side (top face side) of piston 17, thus increasing the angle of inclination of the rocking plate 14.

In this case, when the pressure of cooling medium in the discharge chamber 4 is increased to such an extent that the difference in pressure of cooling medium between the discharge chamber 4 and the crank chamber 12 becomes higher than a predetermined value, thus permitting the pressure of cooling medium in the discharge chamber 4 to overwhelm the pressure of cooling medium in the crank chamber 12, the cooling medium in the discharge chamber 4 is permitted to flow into a condenser 50.

As described above, when the thermal load is increased and the solenoid magnetizing portion 70 of the control valve 100 is magnetized, the plunger 83 is attracted in toward the suction member 85, and the valve 80 contacting with the plunger 83 is caused to move in the direction to close the valve hole 62, thereby the cooling gas is prevented from flowing into the crank chamber 12. On the other hand, the cooling gas of low temperature is introduced from an inlet piping 1 communicating with the suction chamber 3 into the pressure sensitive portion 86 through the cooling medium inlet port 67 and plunger chamber 70a of the control valve 100. As a result, the bellows of the pressure sensitive portion 86 is caused to displace based on the suction pressure Ps of cooling medium in the suction chamber 3, this displacement being subsequently transmitted via the stem 84 and the plunger 83 to the valve 80.

The position of opening degree of the valve 80 (head portion 81) relative to the valve hole 62 is determined depending on the attracting power to be effected by the solenoid magnetization portion 70 and on the urging force of the bellows 87 as well as on the urging forces of the valve-closing spring 64 and the valve-opening spring 85a. Thus, when the pressure of cooling medium (the suction pressure Ps of cooling medium) in the pressure sensitive chamber 86a is increased, the bellows 87 is caused to contract. In this case, since this contracting direction of the bellows 87 is the same as the attracting direction of the plunger 83 to be effected by the solenoid magnetization portion 70, the valve 80 is caused to shift following the displacement of the bellows 87, thus decreasing the opening degree of the valve hole 62. Because of this, the quantity of cooling gas of high pressure to be introduced into the valve chamber 61 from the discharge chamber 4 is caused to decrease (i.e. the cooling medium pressure Pc in the crank chamber is caused to decrease), resulting in an increase of the inclination angle of the rocking plate 14. On the other hand, when the pressure of cooling medium in the pressure sensitive chamber 86a is decreased, the bellows 87 is caused to expand due to the restoring force of the spring and of the bellows 87 itself, thereby causing the valve 80 to shift in the direction of increasing the opening degree of the valve hole 62. As a result, the quantity of cooling gas of high pressure to be introduced into the valve chamber 61 is caused to increase (i.e. the cooling medium pressure Pc in the crank chamber is caused to increase), resulting in a decrease of the inclination angle of the rocking plate 14.

Whereas, when the thermal load becomes smaller, the cooling gas of high pressure is permitted to flow from the discharge chamber 4 into the crank chamber 12, thus increasing the pressure of cooling medium in the crank chamber 12. Then, the force to be produced on the rear side of piston 17 during the compression stroke is increased, so that the total force to be produced on the rear face side of piston 17 becomes larger than the total force to be produced on the front face side of piston 17, thus decreasing the inclination angle of the rocking plate 14. In this case, when the difference in pressure of cooling medium between the discharge chamber 4 and the crank chamber 12 becomes lower than a predetermined value, thus permitting the pressure of cooling medium in the crank chamber 12 to overwhelm the pressure of cooling medium in the discharge chamber 4, the cooling gas is prevented from flowing into the condenser 50.

As described above, when the thermal load is decreased and the solenoid magnetizing portion 70 is demagnetized, the pulling action by the solenoid magnetizing portion 70 to the plunger 83 is caused to vanish, and, due to the urging force of the valve-opening spring 85a, the plunger 83 is caused to move away from the suction member 85 and hence the valve 80 is caused to move in the direction to open the valve hole 62, thus promoting the in-flow of the cooling gas into the crank chamber 12. In this case, when the pressure of cooling medium in the pressure sensitive chamber 86a is increased, the bellows 87 is caused to contract, thus decreasing the opening degree of the valve 80. However, since a lower portion of the stem 84 is detachably mounted on the stopper provided inside the bellows 87, there is no possibility that the displacement of the bellows 87 would give any substantial influence to the valve 80.

As explained above, according to the aforementioned conventional control valve 100, the valve 80 is formed of the rod-shaped body comprising the head portion 81, the neck portion 82, and the large diametral portion 82a, wherein the neck portion 82 is positioned in the valve hole 62 so as to face the cooling medium discharge port 63 which is communicated with a discharge piping 2, and the large diametral portion 82a is fitted into the guiding hole 68 provided in the valve body 60 and sustained enabling the large diametral portion 82a to slidably move up and down.

In this control valve 100 however, precipitates (contamination) are caused to generate in a cooling medium in a long period of use, and due to these precipitates, there is a possibility that the smoothness in sliding movement of the valve 80 is obstructed.

### BRIEF SUMMARY OF THE INVENTION

The present invention has been made to solve the aforementioned problem, and therefore, one of the objects of the present invention is to provide a valve constructed to have a configuration which is substantially free from deteriorating in smoothness of the sliding movement of the valve that may be caused to occur due to the generation of precipitates in a cooling medium in a long period of use.

With a view to attaining the aforementioned object, there is provided, in accordance with the present invention, a control valve for use in a variable capacity type compressor, the control valve comprising a valve body; a solenoid magnetizing portion; and a pressure sensitive portion having a pressure sensor; wherein a valve is provided to have a large diametral portion, and a neck portion neighboring, through a step portion, to the large diametral portion, and the valve body is provided with a guiding hole in which a circumferential wall portion of the large diametral portion is adapted to be introduced and slidably moved; and characterized in that the step portion is provided with a plane extending from the circumferential wall portion of the large diametral portion toward the neck portion to a predetermined extent, the plane acting to prevent fluid from entering into the circumferential wall portion of the large diametral portion.

In a preferable embodiment of the control valve for use in a variable capacity type compressor, the plane acting to prevent fluid from entering into the circumferential wall portion is formed at the step portion and orthogonal to the shifting direction of the valve.

In a more preferable embodiment of any one of the aforementioned control valves for use in a variable capacity type compressor, the entire region of the step portion other than the plane (flat surface) acting to prevent fluid from entering into the circumferential wall portion is constituted by a tapered portion.

In a still more preferable embodiment of the first-mentioned control valve for use in a variable capacity type compressor, the large diametral portion is provided, at a circumferential wall portion thereof in the vicinity of the step portion, with a groove or grooves.

Since the control valve according to the present invention is constructed as explained above, it is possible to expect the following advantages.

Namely, according to the aforementioned first invention, since the step portion is provided with a plane extending from the slide-contacting surface of the large diametral portion toward the neck portion to a predetermined extent so as to prevent fluid from entering into the slide-contacting surface of the large diametral portion, it is now possible to suppress the valve from deteriorating in smoothness of the sliding movement thereof.

According to the second-mentioned control valve, since the plane acting to prevent fluid from entering into the slide-contacting surface of the large diametral portion is formed at the step portion and orthogonal to the shifting direction of the valve, the working of the valve to form the plane can be facilitated.

According to the third-mentioned control valve, in addition to the aforementioned advantages, it is possible to reinforce the valve, since a portion in the vicinity of the step portion of the neck portion is made larger in diameter.

According to the fourth-mentioned control valve, in addition to the aforementioned advantage which is obtainable in the first-mentioned control valve, it is possible to realize the following merit. Namely, since the large diametral portion is provided with an annular groove or grooves at a circumferential wall portion thereof which is spaced away by a predetermined distance from the plane for preventing fluid from entering into the slide-contacting surface, it is possible to collect the precipitates of the cooling medium in the groove or grooves, thereby further suppressing the valve from deteriorating in smoothness of the sliding movement thereof.

### BRIEF DESCRIPTION OF THE SEVERAL VIEWS OF THE DRAWINGS

FIG. 1 is a longitudinal cross-sectional view of a main portion (the region "A" of FIG. 3) of the control valve according to Embodiment 1 of the present invention;
FIG. 2 is a schematic view of a control valve adapted to be employed in a variable capacity type compressor which is useful in the prior art as well as in the present invention;
FIG. 3 is a longitudinal cross-sectional view illustrating the entire structure of the control valve according to Embodiment 1;
FIG. 4 is a longitudinal cross-sectional view of a main portion (a region corresponding to the region "A" of FIG. 3) of the control valve according to Embodiment 2;
FIG. 5 is a longitudinal cross-sectional view of a main portion (a region corresponding to the region "A" of FIG. 3) of the control valve according to Embodiment 3;
FIG. 6 is a longitudinal cross-sectional view illustrating the structure of the control valve according to the prior art; and
FIG. 7 is a diagram illustrating the region "B" of the control valve according to the prior art.

### DETAILED DESCRIPTION OF THE INVENTION

Next, preferable embodiments of the present invention will be explained in detail with reference to the drawings.

### Embodiment 1

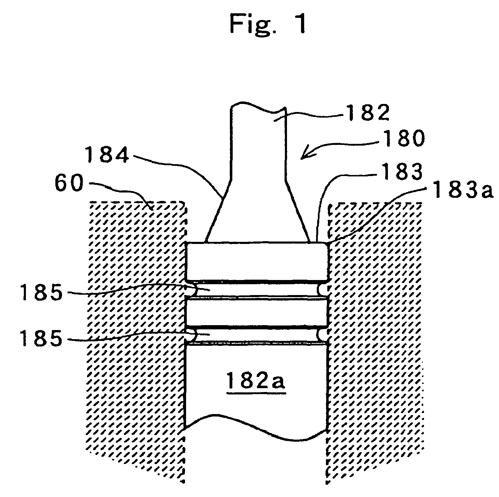

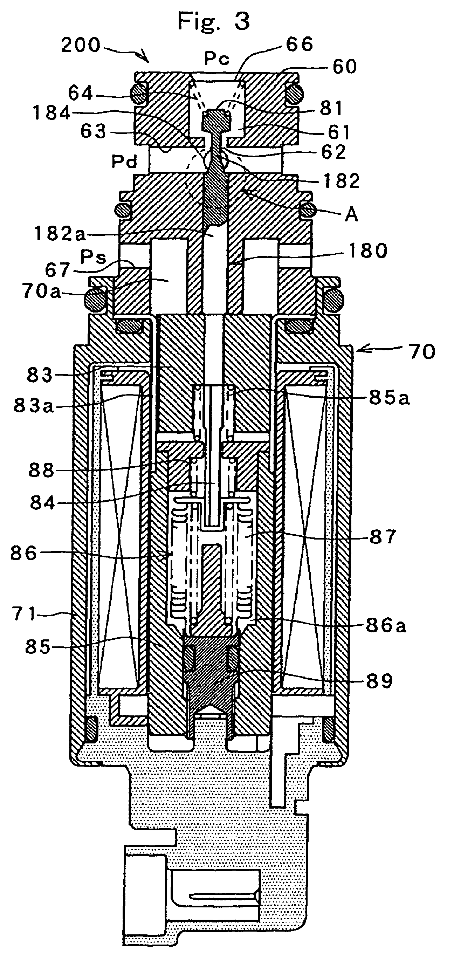

First of all, a control valve 200 of Embodiment 1 according to the present invention will be explained with reference to FIGs. 1 to 3, wherein FIG. 1 shows a longitudinal cross-sectional view of a main portion of the control valve, FIG. 2 shows a schematic view of the variable capacity type compressor, and FIG. 3 shows a longitudinal cross-sectional view illustrating the entire structure of the control valve 200.

Since the variable capacity type compressor 20 shown in FIG. 2 is constructed as already explained above as the prior art, the explanation about the specific features thereof will be omitted. Further, with respect to the control valve 200, although specific components thereof will be explained with reference to FIGs. 1 and 3, the same structural components as those of the conventional control valve shown in FIGs. 6 and 7 will be identified by the same reference numerals, thereby omitting the explanation thereof.

A valve 180 is constituted by a head portion 81, a neck portion (a small diametral portion) 182, and a large diametral portion 182a. Along a boundary portion between the neck portion 182 and the large diametral portion 182a, there is formed a step portion constituted by a flat surface 183 extending in the direction orthogonal to the axis of the valve 180 as shown in FIG. 1. Further, the boundary portion between the neck portion 182 and the large diametral portion 182a is tapered to form a tapered portion 184 extending contiguous from the flat surface 183 to the neck portion 182. The brink portion formed between the large diametral portion 182a and the flat surface 183 is radiused to form a radius portion 183a.

Further, as shown in FIG. 1, at a circumferential wall portion (slide-contacting surface) of the large diametral portion 182a which is located close to the radius portion 183a, there are provided a plurality of annular grooves (for example, a couple of annular grooves) 185 formed parallel with each other and having a predetermined width and a predetermined depth.

Owing to the structure as explained above, even if the valve 180 is slidably moved, the precipitates in the cooling medium can be prevented from entering into the slide-contacting surface of the large diametral portion 182a on account of the flat surface 183, thus rendering the valve 180 substantially free from deteriorating in smoothness of the sliding movement thereof.

### Embodiment 2

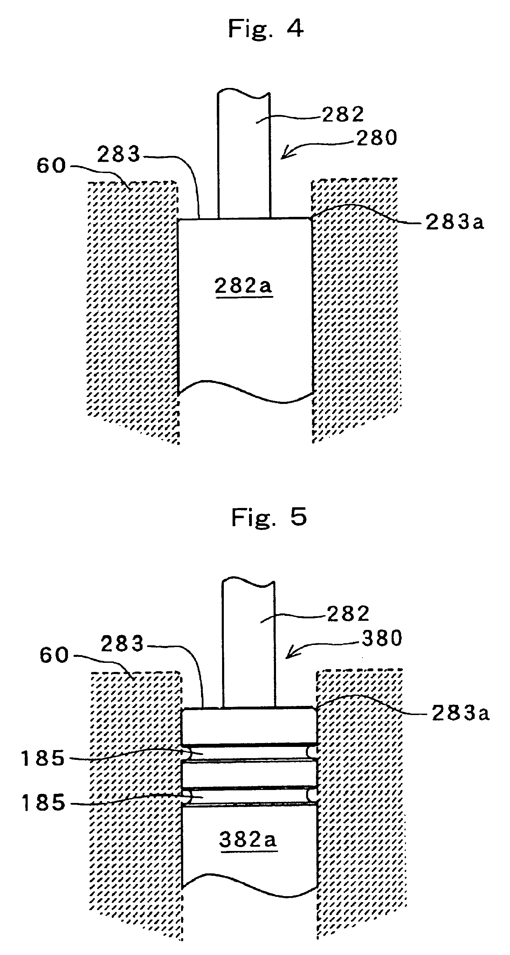

Then, Embodiment 2 according to the present invention will be explained with reference to FIG. 4 showing a longitudinal cross-sectional view of a main portion of the control valve. Even in this Embodiment 2, since the variable capacity type compressor shown in FIG. 4 is constructed as already explained above as the prior art, the explanation about the specific features thereof will be omitted. Further, with respect to the control valve, although the portion of a valve 280 will be explained with reference to FIG. 4, since other structural components are the same as those of the control valve of Embodiment 1 shown in FIG. 1, the same components will be identified by the same reference numerals in FIG. 4, thereby omitting the explanation thereof.

The valve 280 is constituted by a head portion 81, a neck portion (a small diametral portion) 282, and a large diametral portion 282a. Along a boundary portion between the neck portion 282 and the large diametral portion 282a, there is formed a step portion constituted by a flat surface 283 extending in the direction orthogonal to the axis of the valve 280 as shown in FIG. 4. The brink portion formed between the large diametral portion 282a and the flat surface 283 is radiused to form a radius portion 283a. In this embodiment, the annular grooves 185 which are provided in the aforementioned Embodiment 1 are not provided at all.

Owing to the structure as explained above, even if the valve 280 is slidably moved, the precipitates in the cooling medium can be prevented from entering into the slide-contacting surface of the large diametral portion 282a on account of the flat surface 283, thus rendering the valve 280 substantially free from deteriorating in smoothness of the sliding movement thereof.

### Embodiment 3

Then, Embodiment 3 according to the present invention will be explained with reference to FIG. 5 showing a longitudinal cross-sectional view of a main portion of the control valve. Even in this Embodiment 3, since the variable capacity type compressor shown in FIG. 5 is constructed as already explained above as the prior art, the explanation about the specific features thereof will be omitted. Further, with respect to the control valve, although the portion of a valve 380 will be explained with reference to FIG. 5, since other structural components are the same as those of the control valve of Embodiment 1 shown in FIG. 1, the same components will be identified by the same reference numerals in FIG. 5, thereby omitting the explanation thereof.

The valve 380 is constituted by a head portion 81, a neck portion (a small diametral portion) 282, and a large diametral portion 382a. Along a boundary portion between the neck portion 282 and the large diametral portion 382a, there is formed a step portion constituted by a flat surface 283 extending in the direction orthogonal to the axis of the valve 380 as shown in FIG. 5. The brink portion formed between the large diametral portion 382a and the flat surface 283 is radiused to form a radius portion 283a. Further, in the same manner as illustrate in Embodiment 1, a couple of annular grooves 185 are formed along a circumferential wall portion of the large diametral portion 382a.

Owing to the structure as explained above, even if the valve 380 is slidably moved, the precipitates in the cooling medium can be prevented from entering into the slide-contacting surface of the large diametral portion 182a on account of the flat surface 283. Even if the precipitates are permitted to enter into the slide-contacting surface, the precipitates will be kept remain inside this couple of annular grooves 185, thus preventing the precipitates from diffusing into the slide-contacting surface.

The tapered portion is formed to reinforce in the neck portion of the valve in Embodiment 1. As long as the portion has the same reinforcing function, the configuration of the portion is not limited.

## Claims

1. A control valve for use in a variable capacity type compressor, the control valve comprising:
a valve body;
a solenoid magnetizing portion; and
a pressure sensitive portion having a pressure sensor;
wherein a valve is provided to have a large diametral portion, and a neck portion neighboring, through a step portion, to the large diametral portion, and the valve body is provided with a guiding hole in which a circumferential wall portion of the large diametral portion is adapted to be introduced and slidably moved; and
**characterized in that** the step portion is provided with a plane extending from the circumferential wall portion of the large diametral portion toward the neck portion to a predetermined extent, the plane acting to prevent fluid from entering into the circumferential wall portion of the large diametral portion.

2. The control valve according to claim 1, wherein the plane acting to prevent fluid from entering into the circumferential wall portion is formed at the step portion and orthogonal to the shifting direction of the valve.

3. The control valve according to claim 1 or 2, wherein the entire region of the step portion other than the plane acting to prevent fluid from entering into the circumferential wall portion is constituted by a tapered portion.

4. The control valve according to claim 1, wherein the large diametral portion is provided, at a circumferential wall portion thereof in the vicinity of the step portion, with a groove or grooves.
